# EUROPÄISCHE PATENTSCHRIFT

(11) **EP 2 722 567 B1**
(45) Veröffentlichungstag und Bekanntmachung des Hinweises auf die Patenterteilung: **30.12.2015**
(21) Anmeldenummer: 13004946.3
(22) Anmeldetag: 16.10.2013
(51) Int. Cl.: F16J 15/00, F16J 15/56, F15B 15/14, F16J 15/32

(54) **Dichtungseinrichtung für Stangen**
Sealing device for rods
Dispositif d'étanchéité pour tiges

(30) Priorität: 19.10.2012 DE 102012021077
(43) Veröffentlichungstag der Anmeldung: 23.04.2014
(73) Patentinhaber: NIDEC GPM GmbH, 98673 Auengrund /OT Merbelsrod (DE)
(72) Erfinder: Vippach, Michael, 98553 Nahetal-Waldau (DE); Hein, Thomas, 75050 Gemmingen (DE); Lenz, Roland, 74257 Untereisesheim (DE)
(74) Vertreter: Jackisch-Kohl, Anna-Katharina

(56) Entgegenhaltungen:
- DE-A1-102008 011 132
- DE-B4- 19 680 491
- GB-A- 1 367 546
- US-A- 3 490 774
- US-A- 4 067 584
- US-A1- 2008 122 181

## Beschreibung

Die Erfindung betrifft eine Dichtungseinrichtung für Stangen nach dem Oberbegriff des Anspruches

Es sind Dichtungseinrichtungen für Stangen bekannt wie in DE 196 80 491 B4 die ein Dichtelement in Form einer Hydraulikdichtung, ein Dichtelement in Form einer Pneumatikdichtung sowie einen Führungskörper aufweisen, mit dem die abzudichtende Stange geführt wird. Diese drei Baueinheiten werden einzeln montiert, was sehr zeitaufwändig ist. Aufgrund der Summe der Teiletoleranzen zuzüglich der Montage- und Lagetoleranzen ergibt sich für die Dichtungseinrichtung eine sehr hohe Systemtoleranz, die beim Einsatz der Dichtungseinrichtung zu Problemen führen kann.

Der Erfindung liegt die Aufgabe zugrunde, die gattungsgemäße Dichtungseinrichtung so auszubilden, dass sie bei nur geringer Toleranz einfach und zeitsparend montiert werden kann.

Diese Aufgabe wird bei der gattungsgemäßen Dichtungseinrichtung erfindungsgemäß mit den kennzeichnenden Merkmalen des Anspruches 1 gelöst.

Bei der erfindungsgemäßen Dichtungseinrichtung bilden die Dichtelemente und der Führungskörper einen Verbundkörper in Form einer Dichtungseinheit. Sie lässt sich in einem Arbeitsgang als Einheit montieren. Dadurch ist eine sehr einfache und zeitsparende Montage gewährleistet. Die Dichtungseinheit führt auch zu einer relativ geringen Systemtoleranz, weil nur die Montage- und Lagetoleranz der Dichtungseinheit zu berücksichtigen ist. Vorteilhaft sind die beiden Dichtelemente auf jeweils einem Ende des Führungskörpers angeordnet. Die beiden Dichtelemente liegen dadurch räumlich ausreichend weit voneinander getrennt, so dass sie sich nicht gegenseitig beeinflussen.

Um im Einsatz der Dichtungseinrichtung auftretende Drainage zuverlässig abführen zu können, ist vorteilhaft zwischen den Dichtelementen im Führungskörper eine Drainageableitung vorgesehen. Über sie kann die eventuell auftretende Drainage nach außen abgeleitet werden.

Die Ausbildung nach Anspruch 4 ergibt eine Dichtungseinrichtung, bei der die Drainageableitung die Vertiefung aufweist, die sich wenigstens über einen Teil des Umfanges des Führungskörpers erstreckt und in die wenigstens eine den Führungskörper durchsetzende Öffnung mündet. Über diese Öffnung wird die eventuell auftretende Drainage nach außen zur Vertiefung abgeleitet, über die die Drainage abgeleitet bzw. abgeführt werden kann. Da die Öffnung in die Vertiefung mündet, muss beim Einbau der Dichtungseinrichtung in ein entsprechendes Gehäuse oder einen Aufnahmeraum eines Gerätes die Öffnung nicht in aufwändiger Weise in Flucht bzw. in Deckung zu einer Abführöffnung im Gehäuse bzw. im Aufnahmeraum gebracht werden. Wesentlich ist nur, dass die Vertiefung am Führungskörper mit der Ableitungsöffnung des Gehäuses bzw. des Aufnahmeraumes in Verbindung steht.

Besonders vorteilhaft ist es, wenn sich diese Vertiefung über den gesamten Umfang des Führungskörpers erstreckt. Dann muss beim Einbau der Dichtungseinrichtung in den Aufnahmeraum oder in das Gehäuse nicht auf eine radiale Ausrichtung der Öffnung im Führungskörper geachtet werden. Die umlaufende Vertiefung stellt in diesem Falle jederzeit sicher, dass die Drainage über die Öffnung des Führungskörpers in die Ableitungsöffnung des Aufnahmeraumes bzw. des Gehäuses gelangt. Beim Einbau muss lediglich dafür gesorgt werden, dass die umlaufende Vertiefung axial gegenüber der Ableitungsöffnung des Gehäuses bzw. Aufnahmeraumes ausgerichtet ist. Dies lässt sich sehr einfach beispielsweise durch einen Anschlag erreichen, an dem die Dichtungseinrichtung beim Einbau zur Anlage kommt und wodurch diese Lagepositionierung der Vertiefung des Führungskörpers zur Ableitungsöffnung gewährleistet wird.

Die Vertiefung ist bei einer vorteilhaften Ausführungsform an einem nach außen ragenden umlaufenden Flansch des Führungskörpers vorgesehen. Dieser Flansch kann beispielsweise als Anschlag genutzt werden, um beim Einbau der Dichtungseinrichtung die Ausrichtung der Vertiefung relativ zur Ableitungsöffnung in einfacher Weise zu erreichen.

Vorteilhaft durchsetzt die Öffnung des Führungskörpers den Flansch.

Der umlaufende Flansch des Führungskörpers trennt vorteilhaft die beiden Dichtelemente voneinander, so dass durch den Flansch eine räumliche Trennung der beiden Dichtelemente gewährleistet ist.

Die beiden Dichtelemente ragen vorteilhaft mit einem dynamischen Dichtabschnitt axial über den Führungskörper. Dadurch wird erreicht, dass die dynamischen Dichtabschnitte die für die dynamische Dichtung erforderliche Bewegungsfreiheit haben.

Eine zuverlässige Abdichtung wird erreicht, wenn die dynamischen Dichtabschnitte im axial überstehenden Bereich mit einer Dichtkante versehen sind, die dichtend an der Stange anliegt.

Vorteilhaft sind die dynamischen Dichtabschnitte als Dichtlippen ausgebildet. Sie liegen dann unter radialer Vorspannung an der abzudichtenden Stange an, wodurch sich eine einwandfreie Abdichtung erreichen lässt.

Bei einer vorteilhaften Ausführungsform umgreifen die Dichtelemente den Führungskörper stirnseitig. Dadurch wird der Führungskörper beispielsweise vor schädlichen Medien geschützt, die den Führungskörper angreifen könnten.

Damit die Dichtelemente in diesem Falle zuverlässig am Führungskörper gehalten werden können, ist er an seinen Stirnseiten jeweils mit einer Vertiefung versehen, in die der dynamische Dichtabschnitt eingreift.

Die Dichtelemente sind außerdem vorteilhaft mit einem statischen Dichtabschnitt versehen, mit dem die Dichtelemente den Führungskörper umgeben. Die statischen Dichtabschnitte der Dichtelemente liegen dann an der Wandung des Aufnahmeraumes oder des Gehäuses an und stellen sicher, dass in diesem Bereich kein abzudichtendes Medium hindurchtreten kann.

Die statische Abdichtung lässt sich in vorteilhafter Weise erhöhen, wenn der statische Dichtabschnitt an seiner Außenseite mit einer elastisch verformbaren Profilierung versehen ist. Sie wird beim Einbau der Dichtungseinrichtung elastisch verformt, wodurch eine zuverlässige statische Abdichtung erreicht wird.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und der Zeichnung.

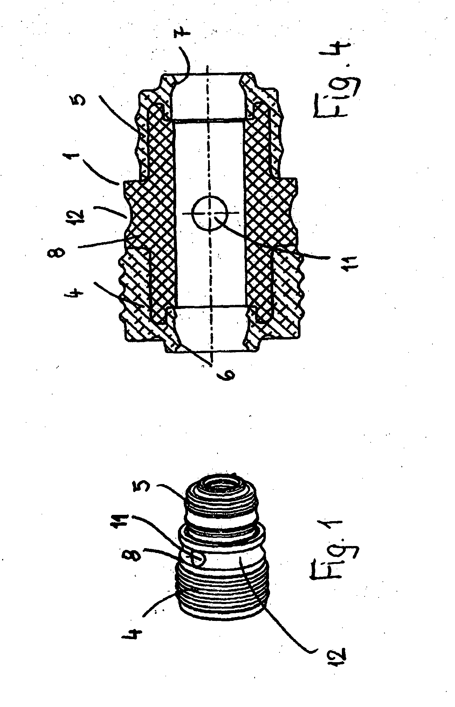

Die Erfindung wird anhand eines in der Zeichnung dargestellten Ausführungsbeispieles näher erläutert. Es zeigen
- Fig. 1: in perspektivischer Darstellung eine erfindungsgemäße Dichtungseinrichtung,
- Fig. 2: einen Axialschnitt durch die erfindungsgemäße Dichtungseinrichtung,
- Fig. 3: die in ein Gehäuse eingebaute Dichtungseinrichtung gemäß Fig. 2,
- Fig. 4: einen weiteren Axialschnitt durch die Dichtungseinrichtung gemäß Fig. 1.

Mit der Dichtungseinrichtung, die nachfolgend als Dichtungseinheit bezeichnet wird, ist es möglich, gegen unterschiedliche Medien dynamisch abzudichten, eventuell auftretendes Drainagemedium abzuführen und dabei gleichzeitig eine Gleitführungsfunktion zu gewährleisten.

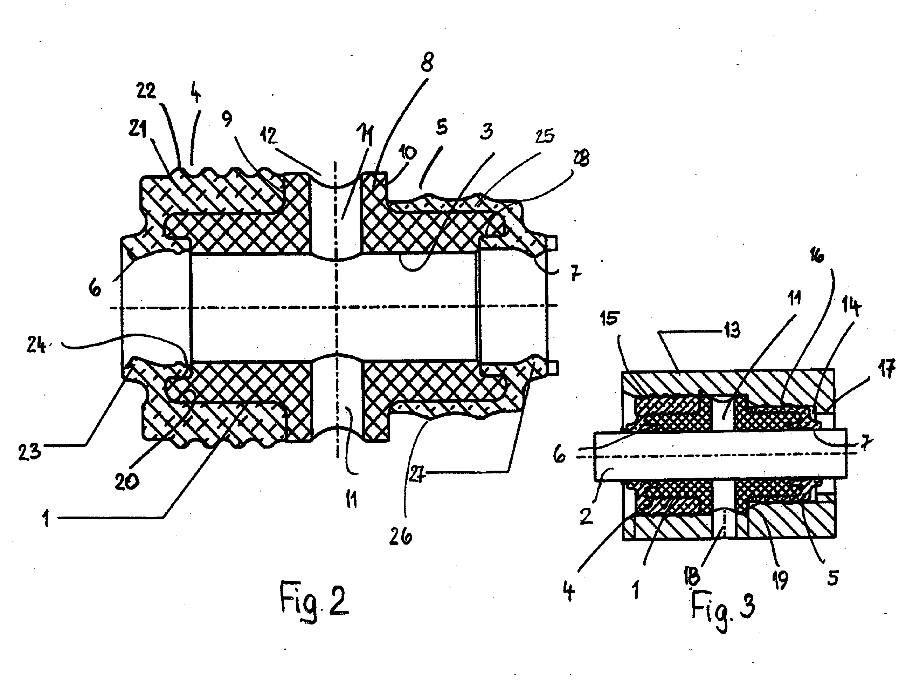

Die Dichtungseinheit hat einen buchsenförmigen Grundkörper 1, der als Führung für eine Stange 2 eines Kolbens dient (Fig. 3). Die Stange 2 liegt an der Innenwand 3 des Grundkörpers 1 an, so dass die Stange 2 bei ihrer Axialverschiebung zuverlässig geführt wird.

Auf dem in Fig. 2 linken Ende des Grundkörpers 1 befindet sich ein Dichtelement 4 und auf dem rechten Ende ein Dichtelement 5. Das Dichtelement 4 ist zur Abdichtung eines Hydraulikmediums und das Dichtelement 5 zur Abdichtung gegen ein Pneumatikmedium vorgesehen. Beide Dichtelemente 4, 5 haben jeweils eine umlaufende Dichtkante 6, 7, mit der sie dichtend auf der Stange 2 aufliegen. Die beiden Dichtkanten 6, 7 liegen im Bereich außerhalb des Grundkörpers 1.

Der Grundkörper 1 besteht vorteilhaft aus einem Duroplast, wie verstärkter Epoxidharz-Compound, Phenolharz-Compound, oder alternativ aus verstärktem Thermoplast, wie Polyamid (PA), Polyphenylensulfid (PPS)- oder Polyetheretherketon (PEEK)-Compound, und hat einen Ringflansch 8, der vorteilhaft durch einen radial vorstehenden umlaufenden Bund gebildet wird. Die beiden Dichtelemente 4, 5 erstrecken sich bis zu den voneinander abgewandten Außenseiten 9, 10 des Flansches 8, der vorteilhaft einstückig mit dem Grundkörper 1 ausgebildet ist.

Der Flansch 8 wird von wenigstens einer Radialöffnung 11 durchsetzt. Im dargestellten Ausführungsbeispiel sind zwei fluchtend zueinander liegende Radialöffnungen 11 vorgesehen, die sich vorteilhaft in halber Breite des Flansches 8 befinden. Die Radialöffnungen 11 münden radial außen in eine umlaufende Vertiefung 12, deren Boden im Axialschnitt konkav gekrümmt ist. Die Radialöffnungen 11 bilden eine innere und die umlaufende Vertiefung 12 eine äußere Drainageableitung. Die zwischen der Stange 2 und der Innenwand 3 der Dichtungseinheit auftretende Drainage kann durch die Radialöffnungen 11 radial nach außen in die Vertiefung 12 gelangen. Aufgrund der umlaufenden Vertiefung 12 muss auf eine lagegenaue Einbauposition der Dichtungseinheit nicht geachtet werden. Dadurch ist eine einfache und sichere Montage gewährleistet.

Fig. 3 zeigt beispielhaft ein Gehäuse 13, in das die Dichtungseinheit eingebaut wird. Das Gehäuse 13 hat eine axiale Durchgangsöffnung 14, welche die Dichtungseinheit aufnimmt. Die Durchgangsöffnung 14 weist drei im Durchmesser unterschiedliche Abschnitte 15 bis 17 auf. Der Abschnitt 15 hat den größten Durchmesser und nimmt das Hydraulikdichtelement 4 auf. Der im Durchmesser kleinere Abschnitt 16 nimmt das Pneumatikdichtelement 5 auf. Der im Durchmesser kleinste Abschnitt 17 der Durchgangsöffnung 14 hat nur sehr geringe axiale Länge. In diesen Abschnitt 17 ragt das Pneumatikdichtelement 5 in noch zu beschreibender Weise. Das Gehäuse 13 hat eine größere Länge als die Dichtungseinheit, die dadurch geschützt im Gehäuse 13 untergebracht werden kann.

Die Wandung des Gehäuses 13 wird durch wenigstens eine Radialbohrung 18 durchsetzt, die in die Vertiefung 12 des Flansches 8 mündet. Dadurch kann die in der Vertiefung 12 befindliche Drainage durch die Radialbohrung 18 nach außen abgeführt werden.

Am Übergang vom Abschnitt 15 in den Abschnitt 16 befindet sich eine radiale Ringschulter 19, an der der Flansch 8 mit seiner Außenseite 10 in der Einbaulage anliegt. Dadurch lässt sich die Einbauposition der Dichtungseinheit im Gehäuse 13 einfach finden.

Das Hydraulikdichtelement 4 hat einen auf der Außenwand 20 des Grundkörpers 1 aufliegenden statischen Dichtabschnitt 21, der sich bis zur Außenseite 9 des Flansches 8 erstreckt und an seiner radial äußeren Mantelfläche mit einer Profilierung 22 versehen ist, die vorzugsweise eine Wellenprofilierung ist. Im nicht eingebauten Zustand steht die Profilierung 22 radial über den Flansch 8 vor. Dadurch wird die Profilierung 22 in der Einbaulage der Dichtungseinheit elastisch so verformt, dass eine einwandfreie statische Abdichtung zur Wandung des Abschnittes 15 der Durchgangsöffnung 14 erreicht wird. Der Außendurchmesser des Flansches 8 entspricht dem Durchmesser des Abschnittes 15.

Der Dichtabschnitt 21 geht in einen dynamischen Dichtabschnitt 23 über, der die Stirnseite des Grundkörpers 1 umgreift und sie somit abdeckt. Um einen sicheren Halt dieses Dichtabschnittes 23 am Grundkörper 1 zu gewährleisten, ist an der Stirnseite des Grundkörpers 1 eine Vertiefung 24 vorgesehen, die nach innen offen ist. In diese Vertiefung 24 greift der Dichtabschnitt 23 mit seinem einen Ende ein. Der Dichtabschnitt 23 ragt bis zum Boden der Vertiefung 24. Die Dichtkante 6 des ringförmigen dynamischen Dichtabschnittes 23 steht in nicht eingebautem Zustand radial nach innen über die Innenwand 3 des Grundkörpers 1 vor. Dadurch liegt der Dichtabschnitt 23 bei montierter Stange 2 unter radialer Vorspannung dichtend an der Außenseite der Stange 2 an.

Das Pneumatikdichtelement 15 hat ebenfalls einen ringförmigen statischen Dichtabschnitt 25, der auf dem Grundkörper aufsitzt und bis zur Außenseite 10 des Flansches 8 reicht. Die Außenseite des Dichtabschnittes 25 ist mit einer Profilierung 26 versehen, die vorteilhaft wellenförmig ausgebildet ist. In der Einbaulage wird die Profilierung 26 elastisch verformt, wodurch eine einwandfreie Abdichtung zur Innenwand des Abschnittes 16 der Durchgangsöffnung 14 erreicht wird. Dadurch ergibt sich eine optimale statische Abdichtung.

Das Dichtelement 5 hat einen dynamischen Dichtabschnitt 27, der ringförmig ausgebildet ist und die entsprechende Stirnseite des Grundkörpers 1 umgreift. An dieser Stirnseite ist ebenfalls eine Vertiefung 28 vorgesehen, die radial nach innen offen ist und in die ein Teil des dynamischen Dichtabschnittes 27 eingreift. Der dynamische Dichtabschnitt 27 erstreckt sich bis zum Boden der stirnseitigen Vertiefung 28.

Die ringförmige Dichtkante 7 des dynamischen Dichtabschnittes 27 steht bei nicht montierter Stange 2 radial nach innen über die Innenwand 3 der Durchgangsöffnung 14 vor. Bei montierter Stange 2 liegt die Dichtkante 7 unter radialer Vorspannung dichtend an der Stange 2 an.

Im dargestellten Ausführungsbeispiel ragt die Außenseite 10 des Flansches 8 radial über den statischen Dichtabschnitt 25 vor. Dadurch kann dieser überstehende Teil der Außenseite 10 als Anschlag wirken, wenn die Dichtungseinheit in das Gehäuse 13 eingebaut wird. Hierbei wird die Dichtungseinheit in die Durchgangsöffnung 14 des Gehäuses 13 eingepresst, wobei die Profilierungen 22, 26 der beiden Dichtelemente 4, 5 in der beschriebenen Weise elastisch verformt werden. Die Dichtungseinheit sitzt mit Presssitz in der Durchgangsöffnung 14 des Gehäuses 13. Wird die abzudichtende Stange 2 in die Dichtungseinheit geschoben, werden die dynamischen Dichtabschnitte 23, 27 der Dichtelemente 4, 5 elastisch verformt, wodurch die Dichtkanten 6, 7 unter radialer Vorspannung an der Stange 2 dichtend anliegen.

Die beiden Dichtelemente 4, 5 bestehen hinsichtlich des abzudichtenden Mediums aus den dafür geeigneten Werkstoffen, beispielsweise Nitrilkautschuk (NBR), Acrylkautschuk (ACM) oder Fluorkautschuk (FPM).

Die Dichtelemente 4, 5 werden mit dem Grundkörper 1 vorteilhaft fest miteinander verbunden, wobei die Art der Befestigung vom Werkstoff des Grundkörpers 1 sowie der Dichtelemente 4, 5 abhängt.

Die beschriebene Dichtungseinheit zeichnet sich dadurch aus, dass sie kompakt ausgebildet ist und einfach montiert werden kann. Die Dichtungseinheit ist ein Verbundkörper und in der beschriebenen Weise so ausgebildet, dass sie eine Stangenführung sowie eine Drainageableitung integriert hat. Da der Führungskörper 1 die Ringvertiefung 12 aufweist, muss die Radialöffnung 11 des Grundkörpers 1 nicht mit der Radialbohrung 18 des Gehäuses 13 in Deckung gebracht werden, was die Montage besonders vereinfacht. Die Dichtungseinheit eignet sich besonders für Systeme, bei denen Kolben oder Stangen auf kleinstem Raum geführt und gleichzeitig gegen unterschiedliche Medien abgedichtet werden müssen.

Der Grundkörper 1 kann innenseitig mit einer (nicht dargestellten) Gleitbuchse versehen sein. Die dynamischen Dichtabschnitte 23, 27 sind als Dichtlippen ausgebildet, die sich axial über den Grundkörper 1 hinaus erstrecken und eine für eine gute dynamische Abdichtung vorteilhafte Flexibilität haben. Die Flexibilität ist in der Einbaulage nicht beeinträchtigt, weil die Abschnitte 15 und 17 der Durchgangsöffnung 14 des Gehäuses 13 einen großen Durchmesser haben, der größer ist als der Außendurchmesser der dynamischen Dichtabschnitte 23, 27.

## Patentansprüche

1. Dichtungseinrichtung für Stangen (2), mit zwei Dichtelementen (4, 5), die gegen unterschiedliche Medien abdichten, mit einem Führungskörper (1) für die Stange (2), der zusammen mit den Dichtelementen (4, 5) einen Verbundkörper in Form einer Dichtungseinheit bildet, die als Einheit montierbar ist, wobei der Führungskörper (1) mit einer Drainageableitung (11, 12) versehen ist, die wenigstens eine den Führungskörper (1) durchsetzende Öffnung (11) aufweist, die in eine an der Außenseite des Führungskörpers (1) vorgesehene, wenigstens über einen Teil seines Umfanges verlaufende Vertiefung (12) mündet, wobei die Dichtelemente (4, 5) einen statischen Dichtabschnitt (21, 25) und einen dynamischen Dichtabschnitt (23, 27) aufweisen,
**dadurch gekennzeichnet, dass** der Führungskörper (1) einen Ringflansch (8) aufweist, der durch einen radial vorstehenden umlaufenden Bund gebildet ist, dass die Dichtelemente (4, 5) mit dem statischen Dichtabschnitt (21, 25) den Führungskörper (1) umgeben, dass die beiden Dichtelemente (4, 5) sich bis zu den voneinander abgewandten Außenseiten (9, 10) des Ringflansches (8) erstrecken, dass im Ringflansch (8) die Vertiefung (12) und die Öffnung (11) vorgesehen ist, die den Ringflansch (8) radial durchsetzt, dass der statische Dichtabschnitt (21) des einen Dichtelementes (4) sich bis zur einen Außenseite (9) des Ringflansches (8) erstreckt und an seiner radial äußeren Mantelfläche mit einer elastisch verformbaren Profilierung (22) versehen ist, die im nicht eingebauten Zustand über den Ringflansch (8) radial vorsteht, dass der statische Dichtabschnitt (25) des anderen Dichtelementes (5) bis zur anderen Außenseite (10) des Ringflansches (8) sich erstreckt und an seiner Außenseite mit einer elastisch verformbaren Profilierung (26) versehen ist, und dass der Radialflansch (8) mit seiner Außenseite (10) radial über den statischen Dichtabschnitt (25) des anderen Dichtelementes (5) ragt.

2. Dichtungseinrichtung nach Anspruch 1,
**dadurch gekennzeichnet, dass** sich die Vertiefung (12) über den Umfang des Führungskörpers (1) erstreckt.

3. Dichtungseinrichtung nach Anspruch 1 oder 2,
**dadurch gekennzeichnet, dass** die Dichtelemente (4, 5) mit dem dynamischen Dichtabschnitt (23, 27) axial über den Führungskörper (1) ragen.

4. Dichtungseinrichtung nach einem der Ansprüche 1 bis 3,
**dadurch gekennzeichnet, dass** die dynamischen Dichtabschnitte (23, 27) der Dichtelemente (4, 5) im axial überstehenden Bereich eine Dichtkante (6, 7) aufweisen.

5. Dichtungseinrichtung nach einem der Ansprüche 1 bis 4,
**dadurch gekennzeichnet, dass** die dynamischen Dichtabschnitte (23, 27) als Dichtlippen ausgebildet sind.

6. Dichtungseinrichtung nach einem der Ansprüche 1 bis 5,
**dadurch gekennzeichnet, dass** die Dichtelemente (4, 5) den Führungskörper (1) stirnseitig umgreifen.

7. Dichtungseinrichtung nach einem der Ansprüche 1 bis 6,
**dadurch gekennzeichnet, dass** der Führungskörper (1) an seinen Stirnseiten jeweils mit einer Vertiefung (24, 28) versehen ist, in die der dynamische Dichtabschnitt (23, 27) eingreift.

## Claims

1. A sealing device for rods (2), with two sealing elements (4, 5) which seal against various media, with a guide body (1) for the rod (2), said guide body forming together with the sealing elements (4, 5) a composite body in the form of a sealing unit, which can be assembled as a unit, wherein the guide body (1) is provided with a drainage discharge (11, 12), which comprises at least one opening (11) which passes through the guide body (1) and which emerges into a recess (12) provided on the outer side of the guide body (1) and runs at least over a part of its circumference, wherein the sealing elements (4, 5) comprise a static sealing portion (21, 25) and a dynamic sealing portion (23, 27), **characterised in that** the guide body (1) comprises an annular flange (8), which is constituted by a radially projecting circumferential collar, that the sealing elements (4, 5) surround to the guide body (1) with the static sealing portion (21, 25), that the two sealing elements (4, 5) extend up to the outer sides (9, 10) of the annular flange (8) facing away from one another, that the recess (12) and the opening (11) are provided in the annular flange (8), said opening passing radially through the annular flange (8), that the static sealing portion (21) of the one sealing element (4) extends up to an outer side (9) of the annular flange (8) and is provided at its radially outer lateral surface with an elastically deformable profiling (22) which, in the non-assembled state, projects above the annular flange (8), that the static sealing portion (25) of the other sealing element (5) extends up to the outer side (10) of the annular flange (8) and is provided at its outer side with an elastically deformable profiling (26), and that the radial flange (8) projects with its outer side (10) radially above the static sealing portion (25) of the other sealing element (5).

2. The sealing device according to claim 1,
**characterised in that** the recess (12) extends over the circumference of the guide body (1).

3. The sealing device according to claim 1 or 2,
**characterised in that** the sealing elements (4, 5) project with the dynamic sealing portion (23, 27) axially above the guide body (1).

4. The sealing device according to any one of claims 1 to 3,
**characterised in that** the dynamic sealing portions (23, 27) of the sealing elements (4, 5) comprise a sealing edge (6, 7) in the axially projecting region.

5. The sealing device according to any one of claims 1 to 4,
**characterised in that** the dynamic sealing portions (23, 27) are constituted as a sealing lips.

6. The sealing device according to any one of claims 1 to 5,
**characterised in that** the sealing elements (4, 5) engage around the guide body (1) at the end face.

7. The sealing device according to any one of claims 1 to 6,
**characterised in that** the guide body (1) is provided at its end faces in each case with a recess (24, 28), into which the dynamic sealing portion (23, 27) engages.

## Revendications

1. Dispositif d'étanchéité pour tiges (2), comprenant deux éléments d'étanchéité (4, 5) créant une étanchéité contre différents agents, comprenant un corps de guidage (1) pour la tige (2) qui forme conjointement avec les éléments d'étanchéité (4, 5) un corps composite en forme d'unité d'étanchéité qui peut être montée en tant qu'unité, sachant que le corps de guidage (1) est doté d'une ligne de purge (11, 12) qui présente au moins une ouverture (11) traversant le corps de guidage (1) qui débouche dans un creux (12) prévu sur un côté extérieur du corps de guidage (1), au moins sur une partie de son pourtour, sachant les éléments d'étanchéité (4, 5) présentent un tronçon d'étanchéité statique (21, 25) et un tronçon d'étanchéité dynamique (23, 27), **caractérisé en ce que** le corps de guidage (1) présente une bride annulaire (8) qui est formée par un collet périphérique en saillie radiale, que les éléments d'étanchéité (4, 5) entourent le corps de guidage (1) avec le tronçon d'étanchéité statique (21, 25), que les deux éléments d'étanchéité (4, 5) s'étendent jusqu'aux côtés (9, 10) détournés l'un de l'autre de la bride annulaire (8), que le creux (12) et l'ouverture (11) sont prévus dans la bride annulaire (8), traversant la bride annulaire (8), que le tronçon d'étanchéité statique (21) de l'un élément d'étanchéité (4) s'étend jusqu'à un côté extérieur (9) de la bride annulaire (8) et est doté sur sa surface cylindrique extérieure radiale d'un profilé à déformation élastique (22) qui fait saillie radialement au-dessus de la bride annulaire (8) dans l'état non monté, que le tronçon d'étanchéité statique (25) de l'autre élément d'étanchéité (5) s'étend jusqu'à l'autre côté extérieur (10) de la bride annulaire (8) et est doté sur son côté extérieur d'un profilé à déformation élastique (26), et que la bride radiale (8) avec son côté extérieur (10) fait saillie radialement au-dessus du tronçon d'étanchéité statique (25) de l'autre élément d'étanchéité (5).

2. Dispositif d'étanchéité selon la revendication 1,
**caractérisé en ce que** le creux (12) s'étend au-dessus du pourtour du corps de guidage (1).

3. Dispositif d'étanchéité selon la revendication 1 ou 2,
**caractérisé en ce que** les éléments d'étanchéité (4, 5) font saillie axialement au-dessus du corps de guidage (1) avec le tronçon d'étanchéité dynamique (23, 27).

4. Dispositif selon l'une des revendications 1 à 3,
**caractérisé en ce que** les tronçons d'étanchéité dynamique (23, 27) des éléments d'étanchéité (4, 5) présentent une arête d'étanchéité (6, 7) dans la partie en saillie axiale.

5. Dispositif selon l'une des revendications 1 à 4,
**caractérisé en ce que** les tronçons d'étanchéité dynamique (23, 27) sont conçus en tant que lèvres d'étanchéité.

6. Dispositif selon l'une des revendications 1 à 5,
**caractérisé en ce que** les éléments d'étanchéité (4, 5) prennent l'avant du corps de guidage (1).

7. Dispositif selon l'une des revendications 1 à 6, ,
**caractérisé en ce que** le corps d'étanchéité (1) est doté respectivement d'un creux (24, 28) sur ses faces avant, dans lequel le tronçon d'étanchéité dynamique (23, 27) s'engage.
